# EUROPÄISCHE PATENTSCHRIFT

(11) **EP 3 722 541 B1**
(45) Veröffentlichungstag und Bekanntmachung des Hinweises auf die Patenterteilung: **27.09.2023**
(21) Anmeldenummer: 20168660.7
(22) Anmeldetag: 08.04.2020
(51) Int. Cl.: E04H 9/14, E02B 1/00, E02B 3/06

(54) **WASSERWELLENBESTÄNDIGES GEBÄUDE**
WATER WAVE RESISTANT BUILDING
BÂTIMENT RÉSISTANT AUX VAGUES

(30) Priorität: 08.04.2019 GE AU2019015044 U
(43) Veröffentlichungstag der Anmeldung: 14.10.2020
(73) Patentinhaber: Koberidze, Kakhaber, 3700 Rustavi (GE)
(72) Erfinder: Koberidze, Kakhaber, 3700 Rustavi (GE)
(74) Vertreter: Jeck, Anton

(56) Entgegenhaltungen:
- JP-A- 2012 219 606
- JP-A- 2014 047 495
- JP-A- 2014 152 462
- JP-A- 2015 068 159

## Beschreibung

Die Erfindung betrifft ein wasserwellenbeständiges Gebäude gemäß dem Oberbegriff des Anspruchs 1. Die Erfindung gehört zum Bauwesen und kann an Meeresküsten, an denen die Gefahr der Wellenausbreitung hoch ist, als Gebäude unterschiedlicher Bestimmung angewendet werden.

Die Suche nach technischen Lösungen zum Schutz vor Naturkatastrophen ist heutzutage wegen des Wachstums der Bevölkerungszahl und des Baus von Siedlungen an den Meeresküsten in der ganzen Welt von besonderer Bedeutung. Die Gefahr, die durch Wasserwellen, insbesondere in Form von Tsunamis, entsteht, war und bleibt eine der größten Gefahren in der Welt. Ungeachtet dessen, dass zur Lösung dieses Problems verschiedene technische Vorkehrungen getroffen wurden, ist dieses Problem die Todesursache vieler Menschen. Deswegen müssen solche Gebäude gebaut werden, die gegen Wasserwellen beständig sind.

Es sind viele küstenschützende wellenbeseitigende Bauten bekannt, beispielsweise viele schwimmende küstenschützende Bauten, die aus miteinander flexibel verbundenen Schwimmkörpern bestehen, die an am Grund eingerichteten Stützstellen befestigt sind. An der Oberfläche jedes Schwimmkörpers liegen Mittel, die die Energie von Sturzwellen vermindern. Am Grund liegen Elemente, die die Auswirkungen der Energie unter Wasser beseitigen. An der Oberfläche und am Boden jedes Schwimmkörpers liegen Mittel, die die Form einer viereckigen Pyramide haben. Der Körper dieser Mittel ist aus flexiblem Material hergestellt, während der Körperinhalt aus Schaumstoff besteht (s. Dokument 1).

Die Mittel und Bauten zur Reduktion der zerstörenden Kraft von Tsunamis sind bekannt. Es wird die Form von an Küsten eingerichteten wellenschneidenden Barrieren beschrieben (s. Dokument 2).

Das Dokument JP 2012 219606 A beschreibt ein Gebäude aus Stahlbeton, das auf beabstandeten Pfählen im Boden eines Gewässers in Landnähe ruht und dessen den Flutwellen des Gewässers im Wesentlichen zu- und abgewandten Wände im Querschnitt zwei in einem spitzen Winkel miteinander verbunden Flächen aufweist.

Im Dokument JP 2014 047495 A ist ein Gebäude mit einer elliptischen Form beschrieben, das auf dem Grund eines Gewässers in Landnähe ruht und mit seiner Längsachse im Wesentlichen orthogonal zu den Flutwellen des Gewässers ausgerichtet ist, wobei alle Außenwände des Gebäudes sich senkrecht erstrecken.

Das Dokument JP 2015 068159 A beschreibt ein Gebäude, das im Boden eines Gewässers in Landnähe ruht und dessen den Flutwellen des Gewässers im Wesentlichen zugewandten Wände im Querschnitt zwei in einem spitzen Winkel miteinander verbunden Flächen aufweist.

Im Dokument JP 2014 152 462 A ist ein Gebäude mit einem rombusähnlichen Grundriss beschrieben, das im Boden eines Gewässers in Landnähe ruht, mit zwei geraden Längsseiten und mit einer spitzwinkligen Vorder- und Rückseite, dessen Spitzen abgerundet sind und dessen Wände den Flutwellen des Gewässers im Wesentlichen zugewandt sind.

Die durch ihr Technikniveau berühmten küstenschützenden Gebäude befinden sich entlang der Küste im Wasser. Der Schutz vor Überflutung der am Ufer liegenden Bauten bleibt eine aktuelle Aufgabe.

Diese Aufgabe wird durch die kennzeichnenden Merkmale des Anspruchs 1 gelöst.

Mit der vorliegenden Erfindung wird ein wasserwellenbeständiges Mehrfunktionsgebäude geschaffen, das an der Küste gebaut werden kann, an der eine Gefahr von Naturkatastrophen, wie Sturm, Tsunamis usw., besteht.

Das technische Ergebnis der vorliegenden Erfindung ist die Erhöhung der Beständigkeit und Sicherheit des Gebäudes an der Küste während der Flut.

Das Wesen der vorliegenden Erfindung liegt darin, dass der Küstenbau ein mehrfunktionales Gebäude mit einem oder mehreren Stockwerken darstellt, dessen wasserseitigen Wände, die unmittelbar unter Wassereinfluss stehen, in spitzem Winkel aneinander gelegen sind, so dass eine Spaltung der Welle erfolgt und deren Geschwindigkeit reduziert wird.

Eine solche Konstruktion des Gebäudes und der Lage von Wänden gewährleistet die Beständigkeit des Baus und seine erhöhte Sicherheit während der Naturkatastrophen.

Das vorliegende wellenbeständige Gebäude wird in einer Zeichnung näher dargestellt.

Es zeigen:
- Fig. 1: eine Gebäudeansicht von oben,
- Fig. 2: eine Seitenansicht des Gebäudes und

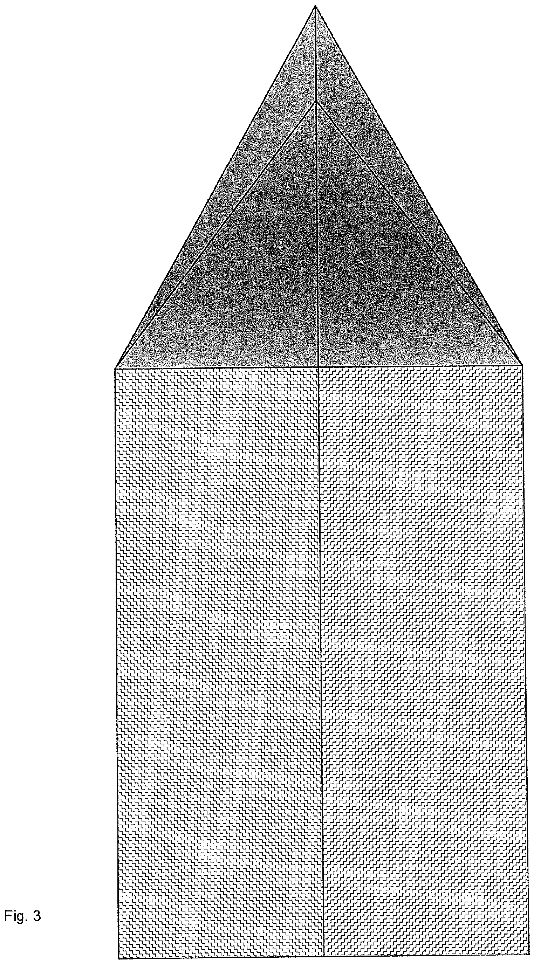

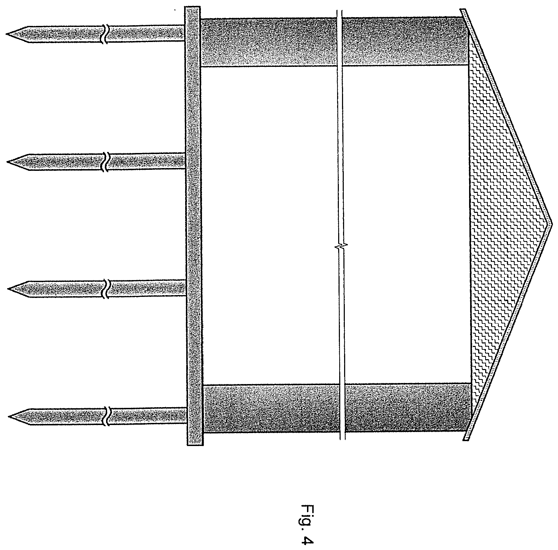

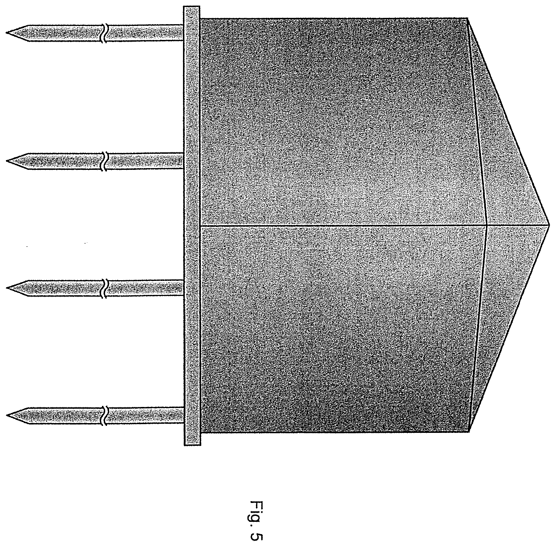

- Fig. 3 - 5: weitere Ansichten des Gebäudes.

Der wellenbeständige Bau liegt an der Küste eines Gewässers, in dem am Grund stützende Eisenbetonkonstruktionen angeordnet sind.

Die zum Gewässer gerichteten wellenspaltenden Wände bilden an ihren Verbindungsstellen einen spitzen Winkel, zum Beispiel von 60 - 90°. Die Verbindungsrippen dieser Wände, die Wellentrenner, enthalten einen ersten Grat, der die Welle spaltet, entkräftet und die Wellengeschwindigkeit vermindert. An den Seitenwänden des Baus sind in Abständen Eisenbetonvorsprünge vorgesehen, die zu mehr Festigkeit eines ganzen Elements der Seitenwände beitragen können. Die an diesen Vorsprüngen querschlagenden Wassermassen stürzen aufeinander und reduzieren die Strömungsgeschwindigkeit. Beim Stoß des Wasserstroms richtet sich ein Teil des Stroms quer am Hauptteil aus, wodurch ein Hauptteil der kinetischen Energie gelöscht wird. Der Wasserspalter mit dem entsprechenden Teil des Daches des Baus bildet eine Ganzheit, was einen Übergang der Welle gewährleistet, so dass dem Bau wenig Schaden zugefügt wird. Entsprechend der Größe des Baus werden die Größen und die Anzahl der Seitenvorsprünge geändert.

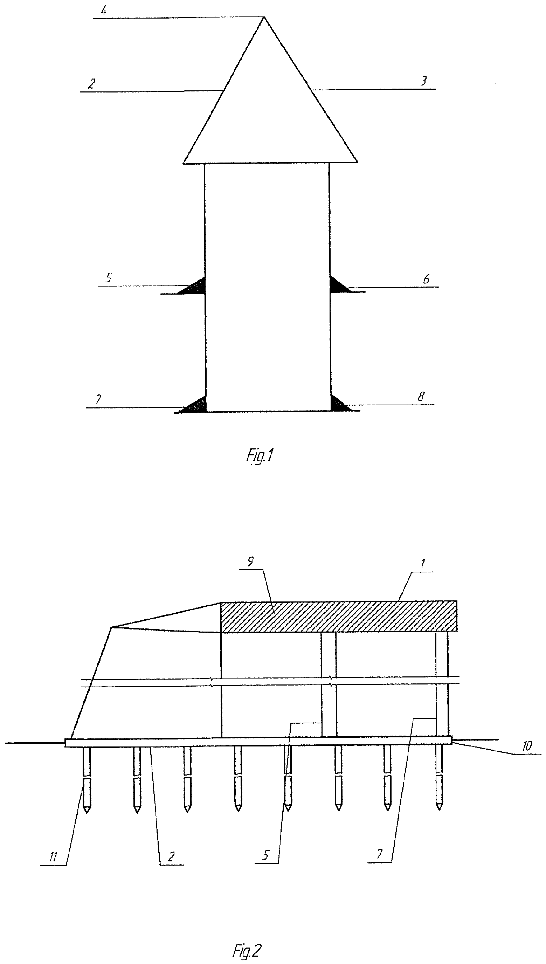

Im Einzelnen ist in den Figuren 1 und 2 das Gebäude mit 1 bezeichnet, das zur Wasserseite hin mit Seitenwänden 2, 3 versehen ist. Diese Seitenwände bilden einen spitzen Winkel mit einem Grat 4, der die ankommenden Wellen zerteilt. Das Gebäude 1 ist mit im Querschnitt dreieckförmigen senkrechten Rippen 5 - 8 versehen, die aus Eisenbeton bestehen, an den Gebäudeseitenwänden befestigt sind und einen Widerstand gegen die querschlagenden Wassermassen bilden, so dass deren Energieeinwirkung vermindert wird.

Die Seitenansicht in Fig. 2 zeigt das Gebäude 1 mit einer Gebäudeseitenwand, an der die Seitenwand 2 angesetzt ist. Die Seitenwände 2, 3 weisen einen schrägen Grat 4 auf, der zur Wasserseite zeigt und zum Wasser hinabfällt, so dass die Fläche der Seitenwand 2 vom Dach 9 zum Boden des Gebäudes zunimmt. Das Gebäude 1 ruht auf einem Fundament 10 aus Eisenbeton, das in Abständen mit Pfählen 11 im Wasserbereich im Küstenboden gesichert ist.

Die vorliegende Erfindung zeichnet sich durch ihre Einfachheit, niedrige Kosten und hohe Sicherheit aus.

### Quellen:

Dokument 1: GE P 2017 6785 B,
Dokument 2: RU 2 474 643 C2.

## Patentansprüche

1. Wasserwellenbeständiges Gebäude (1), das an der Küste eines Gewässers auf einem Fundament (10) aus Eisenbeton ruht, das in Abständen mit Pfählen (11) im Wasserbereich im Küstenboden gesichert ist und ein ein- oder mehrstöckiges Gebäude (1) mit einem Dach (9) darstellt, wobei wellenspaltende Seitenwände (2, 3), die im Wasserstrom angeordnet sind und zur Wasserseite hinzeigen, miteinander im spitzen Winkel verbunden sind,
**dadurch gekennzeichnet,**
**dass** die Wände (2, 3) an ihrer spitzwinkeligen Verbindung zueinander einen schrägen Grat (4) aufweisen, der zur Wasserseite zeigt und zum Wasser hinabfällt, so dass die Fläche der Seitenwände (2, 3) vom Dach (9) zum Boden des Gebäudes zunimmt und
**dass** an den Gebäudeseitenwänden in Abständen zusätzliche Eisenbetonvorsprünge (5 - 8) in Form von im Querschnitt dreieckförmigen senkrechten Rippen vorgesehen sind.

## Claims

1. Water wave-resistant building (1), which rests on the coast of a body of water on a foundation (10) made of reinforced concrete, which is secured at intervals with piles (11) in the water area in the coastal soil and a one- or multi-storey building (1) with a roof (9), wherein wave-splitting side walls (2, 3), which are arranged in the water flow and point towards the water side, are connected to one another at an acute angle,
characterized,
that the walls (2, 3) have an oblique ridge (4) at their acute-angled connection to one another, which points towards the water side and falls down towards the water, so that the area of the side walls (2, 3) extends from the roof (9) to the floor of the building increases and
that additional reinforced concrete projections (5 - 8) in the form of vertical ribs with a triangular cross-section are provided at intervals on the side walls of the building.

## Revendications

1. Bâtiment résistant aux vagues (1) reposant sur la plage d'un plan d'eau sur un fondement (10) de béton armé qui est sécurisé à des intervalles grâce à des pilotis (11) dans l'espace aquatique dans une zone côtière présentant un bâtiment à un étage ou à plusieurs étages (1) avec un toit (9) où les parois latérales séparant les ondes (2,3), disposées dans le courant d'eau et pointant vers la berge, sont reliées entre elles selon un angle aigu est caractérisé de sorte que les parois (2,3) présentent dans leur aigle aigu l'une à l'autre un angle oblique (4) pointant vers la berge et tombant vers l'eau afin que la surface des parois latérales (2,3) augmente du toit en direction du sol du bâtiment et que des saillies de béton armé supplémentaires (5-8) sont prévues au niveau des parois latérales du bâtiment à des intervalles sous forme de nervures triangulaires verticales en section transversale.
